# FASCICULE DE BREVET EUROPEEN

(11) **EP 1 514 768 B1**
(45) Date de publication et mention de la délivrance du brevet: **14.05.2008**
(21) Numéro de dépôt: 04292156.9
(22) Date de dépôt: 08.09.2004
(51) Int. Cl.: B62D 25/10, B62D 25/16

(54) **Utilisation d'une alle et d'un capot en combinaison avec un coussin gonflable, moyen de retenue et support d'aile, aile, module d'aile et capot d'un véhicule automobile**
Gebrauchsverfahren fur einem Kotflügel und eine Motorhaube, mit einem Luftkissen und einem Kotflügel Stutz , Kfz-Kotflügel, Kfz-Kotflügelmodul, und Kfz-Motorhaube
Combined use of a wing and bonnet with an airbag and a wing retention and support device, vehicle wing, vehicle wing module and bonnet

(30) Priorité: 09.09.2003 FR 0310633
(43) Date de publication de la demande: 16.03.2005
(73) Titulaire: COMPAGNIE PLASTIC OMNIUM, 69007 Lyon (FR)
(72) Inventeur: Rocheblave,Laurent, 69530 Brignais (FR); Fayt, Arnold, 01640 Jujurieux (FR)
(74) Mandataire: Remy, Vincent Noel Paul

(56) Documents cités:
- EP-A- 1 258 417
- EP-A- 1 323 597
- EP-A- 1 364 846
- DE-A- 10 014 832
- DE-A- 10 022 094
- DE-A- 10 239 352
- DE-A- 10 254 733
- DE-A- 19 959 892
- FR-A- 2 844 235
- FR-A- 2 850 348

## Description

La présente invention concerne une utilisation d'une aile et d'un capot en combinaison avec un coussin gonflable, un moyen de retenue et un support d'aile, une aile, un module d'aile et un capot d'un véhicule automobile.

On sait que les constructeurs automobiles cherchent à doter leurs véhicules de systèmes de protection des piétons. On connaît déjà par exemple, des coussins gonflables destinés à se déployer à l'extérieur du véhicule pour couvrir des zones trop rigides, telles que la jonction capot/pare-brise, afin d'amortir un éventuel choc avec le piéton.

Parmi les zones rigides et donc dangereuses pour les piétons, on trouve la jonction aile/capot, relativement raide en raison des juxtapositions des bords du capot et de l'aile.

Pour protéger cette zone aile/capot, on connaît dans l'état de la technique, notamment dans EP 1323597 et DE 19948181, des dispositifs consistant à se déployer tout le long de la jointure pour la couvrir, lors de la détection d'un impact.

Le problème d'un tel dispositif de protection de la jonction aile/capot consiste en ce qu'il se déploie sur une surface restreinte et très localisée.

On connaît également dans l'état de la technique, notamment dans DE 10014832, un dispositif consistant à faire soulever le capot par le déploiement d'un coussin gonflable. Cependant, lors d'un impact, comme le coussin gonflable se déploie principalement sous le capot, la tête du piéton percute la surface extérieure du capot, surface rigide qui peut s'avérer dangereuse même lorsqu'un coussin gonflable est déployé en-dessous.

La présente invention vise à proposer une protection de la jonction aile-capot suffisamment large pour supporter toute la tête du piéton, et également protéger le piéton d'autres pièces rigides plus éloignées de la jonction, telles que la batterie ou les coupelles d'amortisseur.

A cet effet, l'invention a pour objet une utilisation d'une aile et d'un capot à l'avant d'un véhicule automobile, réalisant une jonction aile-capot laissant un jeu prédéterminé entre un bord du capot et un bord de l'aile, en combinaison avec un coussin gonflable destiné à se déployer à l'extérieur du véhicule, de manière qu'au cours de son déploiement, le coussin gonflable déforme l'aile et/ou le capot de façon à agrandir le jeu et à se créer un passage entre le bord du capot et le bord de l'aile.

Ainsi, grâce à l'invention, lorsque le coussin gonflable se déploie, il exerce une pression sur l'aile ou sur le capot qui, convenablement dimensionnés, se déforment facilement de façon à agrandir l'espace entre l'aile et le capot pour laisser sortir le coussin gonflable et protéger une surface relativement grande.

Un avantage particulier de l'invention est de s'adapter à tout type de véhicule, notamment un véhicule présentant trop peu d'espace au voisinage de l'aile pour implanter un système passif de protection du piéton, tel qu'une pièce d'absorption, tout en apportant une protection plus grande que ce système passif.

De façon optionnelle, l'aile et le capot sont utilisés en combinaison avec plusieurs coussins gonflables, ce qui permet d'agrandir la surface protégée. De façon optionnelle, chaque coussin est dimensionné différemment selon qu'il est destiné à protéger un adulte ou un enfant.

Une utilisation d'une aile et d'un capot selon l'invention peut en outre comporter l'une ou l'autre des caractéristiques suivantes :
- le coussin gonflable est destiné à se déployer en couvrant la jonction aile-capot ; et
- l'aile et le capot sont utilisés en combinaison avec des moyens de maintien cassants pour relier l'aile à la structure du véhicule.

L'invention a également pour objet un moyen de retenue d'une aile avant de véhicule automobile, maintenue en position normale d'utilisation sur le véhicule par un moyen de maintien, ce moyen de maintien étant distinct du moyen de retenue et étant apte à libérer l'aile lorsqu'il subit une force supérieure à un seuil prédéterminé, ledit moyen de retenue étant caractérisé en ce qu'il est apte à retenir l'aile libérée par le moyen de maintien.

Un avantage de ce moyen de retenue est qu'il évite que, lors du déploiement du coussin gonflable, l'aile ou une partie de l'aile ne soit projetée vers l'extérieur du véhicule et ne risque de blesser un éventuel piéton ou ne retombe dangereusement au milieu de la route.

Un moyen de retenue selon l'invention peut en outre comporter l'une ou plusieurs des caractéristiques suivantes :
- il comprend un câble fixé à l'aile et à une pièce de structure du véhicule automobile ;
- il comprend une enveloppe fixée à l'aile et à une pièce de structure du véhicule automobile ;
- l'enveloppe est disposée autour du coussin gonflable lorsque celui-ci est dans une position de repos, cette enveloppe ayant l'avantage d'isoler le coussin du milieu extérieur ;
- l'enveloppe est fixée à proximité d'un bord supérieur de l'aile de manière à guider le coussin gonflable au cours de son déploiement ; et
- l'enveloppe présente des dimensions et une résistance suffisantes pour accompagner le coussin gonflable lors de son déploiement et s'interposer entre les bords de l'aile et du capot et le coussin pour le protéger.

L'invention a également pour objet un support d'aile avant de véhicule automobile, reliant une partie supérieure de l'aile à la structure du véhicule, l'aile comportant un bord destiné à jouxter un capot en laissant un jeu prédéterminé avec un bord du capot, caractérisé en ce qu'il comporte un pivot par lequel il peut être relié à la structure, de manière à permettre l'agrandissement du jeu.

De façon optionnelle, ce support d'aile est commandé électriquement.

De façon optionnelle, ce support d'aile est utilisé en combinaison avec un coussin gonflable agencé pour pousser sur le support.

L'invention concerne également un support d'aile avant de véhicule automobile, reliant une partie supérieure de l'aile à la structure du véhicule, caractérisé en ce qu'il comporte un logement pour un coussin gonflable situé entre l'intérieur de l'aile et la structure du véhicule.

De façon optionnelle, ce support d'aile comporte, du côté de la structure, une semelle servant de surface d'appui pour le coussin gonflable au cours de son déploiement.

De façon optionnelle, ce support d'aile comporte une zone apte à se rompre sous la poussée du coussin gonflable pour libérer la partie supérieure de l'aile.

L'invention a également pour objet une aile avant de véhicule automobile comportant une peau de carrosserie séparant l'intérieur et l'extérieur de l'aile, terminée par un bord destiné à jouxter un capot, caractérisée en ce qu'elle comporte un logement pour un coussin gonflable, situé à l'intérieur de l'aile et au voisinage du bord.

Cette aile peut être réalisée en matière plastique ou en tôle.

Un avantage de l'aile en matière plastique consiste en ce qu'il est possible de mouler des formes complexes et donc d'obtenir facilement une conformation compatible avec le déploiement du coussin gonflable.

Une aile selon l'invention peut en outre comporter l'une ou plusieurs des caractéristiques suivantes :
- elle comporte un moyen de maintien sur le véhicule en position normale d'utilisation, venu de matière avec la peau et comportant une zone apte à se rompre ;
- elle comporte un moyen de retenue du type précité.

L'invention a également pour objet un module d'aile avant de véhicule automobile, comprenant une aile avant et un support d'aile du type précité.

Ainsi, grâce à ce module d'aile, les constructeurs automobiles peuvent intégrer, outre la tenue et l'aspect, une fonction de sécurité dans le module d'aile, sans pour autant modifier le style du véhicule.

Un autre avantage apporté par ce module d'aile consiste à accélérer le montage de l'avant du véhicule automobile. En effet, sur la chaîne de montage, le constructeur ne perd pas de temps à monter le coussin gonflable puisque celui-ci a été préalablement intégré au module d'aile.

Ce module d'aile peut comporter des supports d'organes fonctionnels.

Enfin, l'invention a pour objet un capot avant de véhicule automobile, comportant un bord déformable.

De façon optionnelle, le bord de ce capot est déformé lors du déploiement d'un coussin gonflable.

De façon optionnelle, ce capot est en matière plastique, en tôle ou en hybride métal/plastique.

L'invention sera mieux comprise à la lecture de la description qui va suivre, donnée uniquement à titre d'exemple et faite en se référant aux dessins annexés dans lesquels :
- la figure 1 est une section transversale d'une aile et d'un capot de véhicule automobile selon un premier mode de réalisation de l'invention ;
- la figure 2 est une section transversale de l'aile et du capot de la figure 1, une fois que le coussin gonflable a été déployé;
- la figure 3 est une section transversale d'une aile et d'un capot de véhicule automobile selon un deuxième mode de réalisation de l'invention ;
- la figure 4 est une section transversale d'une aile et d'un capot de véhicule automobile selon un troisième mode de réalisation de l'invention
- la figure 5 est une section transversale d'une aile et d'un capot de véhicule automobile selon un quatrième mode de réalisation de l'invention ;
- la figure 6 est une section transversale de l'aile et du capot de la figure 5, une fois que le coussin gonflable est déployé ;
- la figure 7 est une section transversale d'une aile et d'un capot de véhicule automobile selon un cinquième mode de réalisation de l'invention ;
- la figure 8 est une section transversale d'une aile et d'un capot de véhicule automobile selon un sixième mode de réalisation de l'invention ;
- la figure 9 est une section transversale d'une aile et d'un capot de véhicule automobile selon un septième mode de réalisation de l'invention ;
- la figure 10 est une section transversale de l'aile et d'un capot de la figure 7, après le déploiement du coussin gonflable ;
- la figure 11 est une section transversale d'une aile et d'un capot de véhicule automobile selon un huitième mode de réalisation de l'invention ;
- la figure 12 est une section transversale d'une aile et d'un capot de véhicule automobile selon un neuvième mode de réalisation de l'invention ;
- la figure 13 est une section transversale d'une aile et d'un capot de véhicule automobile selon un dixième mode de réalisation de l'invention ; et
- la figure 14 est un schéma en perspective d'une aile et d'un capot de véhicule automobile selon un onzième mode de réalisation de l'invention.

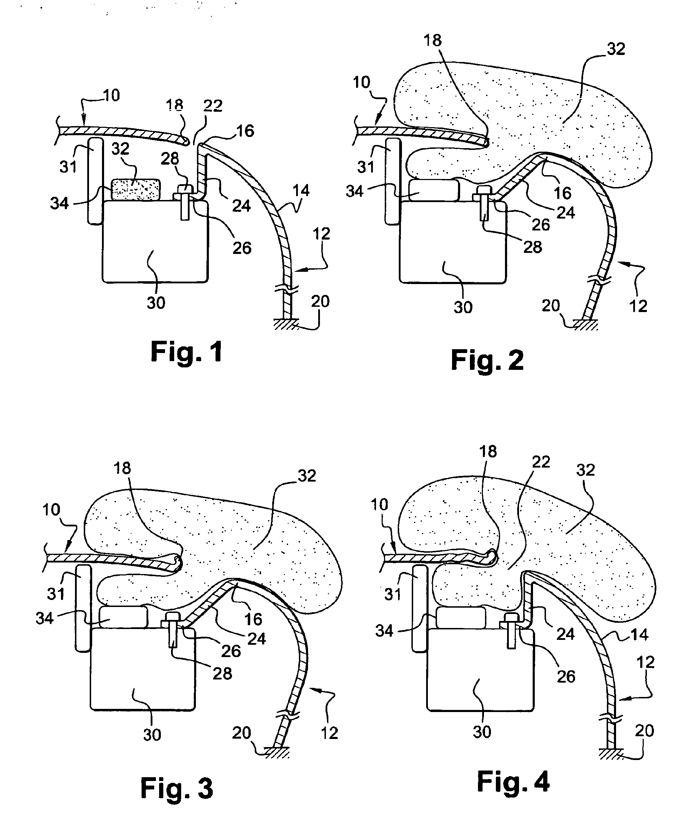

On a représenté sur la figure 1 un avant de véhicule automobile, comportant un capot 10 et une aile avant 12, située sur la gauche du conducteur.

On entend par capot d'un véhicule automobile, la pièce de carrosserie immédiatement voisine du bord supérieur de l'aile avant gauche ou droite du véhicule automobile, y compris ce que l'on appelle la doublure de capot. Généralement, mais pas obligatoirement, le capot peut être ouvert, au moins partiellement, pour accéder au moteur ou au coffre avant.

Dans la suite de la description, on entend par liaison fusible, une liaison apte à se rompre (cassure, dégraffage), et par liaison permanente, une liaison non fusible.

L'aile avant 12 comporte une peau extérieure 14, destinée à être vue de l'extérieur du véhicule automobile. Cette peau 14 comporte un bord supérieur 16, qui jouxte un bord gauche 18 du capot, et un bord inférieur 20, généralement relié à la structure du véhicule.

Le bord 16 de la peau 14 et le bord 18 du capot 10 sont séparés par un jeu 22.

L'aile avant 12 comporte, perpendiculairement à son bord supérieur 16 et du côté intérieur de la face avant, une paroi 24 sensiblement verticale, composant un retour d'aile, permettant d'une part la fixation de l'aile avant 12 sur la structure du véhicule et d'autre part la rigidification de l'aile. La fixation à la structure est réalisée grâce à un rebord 26 de l'extrémité de la paroi verticale 24, qui est fixé à une pièce de structure 30 par des moyens de fixation 28.

Par pièce de structure 30, on entend tout élément, relativement rigide, relié au châssis du véhicule, et apte à supporter des pièces rapportées sur le véhicule automobile, telles que l'aile 12, d'autres pièces de carrosserie, ou des organes fonctionnels. Par exemple, la pièce de structure 30 est un longeron supérieur gauche du véhicule.

Du fait de la paroi verticale 24 moulée sous le bord 16 de l'aile 12, et du bord 18 du capot 10, qui peut en outre comporter aussi un rebord intérieur, la zone constituée par les bords 18, 16, et par le jeu 22, peut être particulièrement dangereuse. En effet, en cas d'accident avec un piéton à l'avant du véhicule, la tête du piéton peut l'impacter.

Pour amortir cet impact, la face avant du véhicule automobile comporte un coussin gonflable 32, replié dans un boîtier 34.

Le coussin gonflable 32 est couramment désigné par la marque déposée "Airbag". Lors d'un impact, des moyens de détection non représentés, situés en général sur le bouclier avant du véhicule, activent le coussin gonflable 32 de façon connue en soi. Une fois activé, le coussin gonflable 32 se remplit de gaz de façon à se déployer vers l'extérieur du véhicule, à couvrir une partie de la carrosserie et amortir le choc entre cette partie et le piéton.

Dans le mode de réalisation de la figure 1, le coussin gonflable 32 est fixé à la pièce de structure 30, de façon à avoir sa base, lors de son déploiement généralement brutal, solidement fixée au véhicule.

Une pièce 31 est solidement fixée à la pièce de structure 30 de façon à séparer la partie de la face avant comportant le coussin gonflable 32 du reste de la face avant. Grâce à cette pièce, lors de son déploiement, le coussin est orienté vers le jeu 22. Cette pièce 31 peut être un organe fonctionnel de la face avant technique. Elle n'est pas indispensable au déploiement du coussin vers l'extérieur, celui-ci pouvant être guidé par des coutures particulières.

On peut voir sur la figure 2 que le coussin 32, une fois déployé, recouvre les bords dangereux 18, 16. Lors de son déploiement, le coussin gonflable 32 a exercé une pression sur les différents organes l'entourant, parmi lesquels le capot 10, la pièce 31 et la paroi 24 de l'aile 12 qui est en matière plastique. L'aile 12 étant plus souple que le capot, elle a présenté moins de résistance que les autres organes et s'est déformée en premier, sous cette pression. Plus précisément, la paroi verticale 24 de l'aile a pivoté autour de son bord 26, solidement fixé à la pièce de structure 30.

Les moyens de fixation 20 de la partie inférieure de l'aile sont permanents, et l'aile déformée est retenue sur la structure du véhicule grâce à ces moyens ainsi qu'à la paroi 24.

Dans ce mode de réalisation, le capot 10 est plus raide que l'aile 12 et celui-ci ne s'est pas déformé.

Cependant, on peut voir sur la figure 3 que, pour un capot 11 présentant une zone de souplesse, une partie de celui-ci, en particulier son bord 18, s'est déformée lors du déploiement du coussin gonflable 32.

Selon un autre mode de réalisation représenté sur la figure 4, le véhicule comporte un capot 13 et une aile 15 tels que l'aile 15 est plus résistante que le capot 13. Alors, lors du déploiement du coussin gonflable, c'est le bord 18 du capot 13 uniquement qui s'est déformé de façon à agrandir le jeu 22.

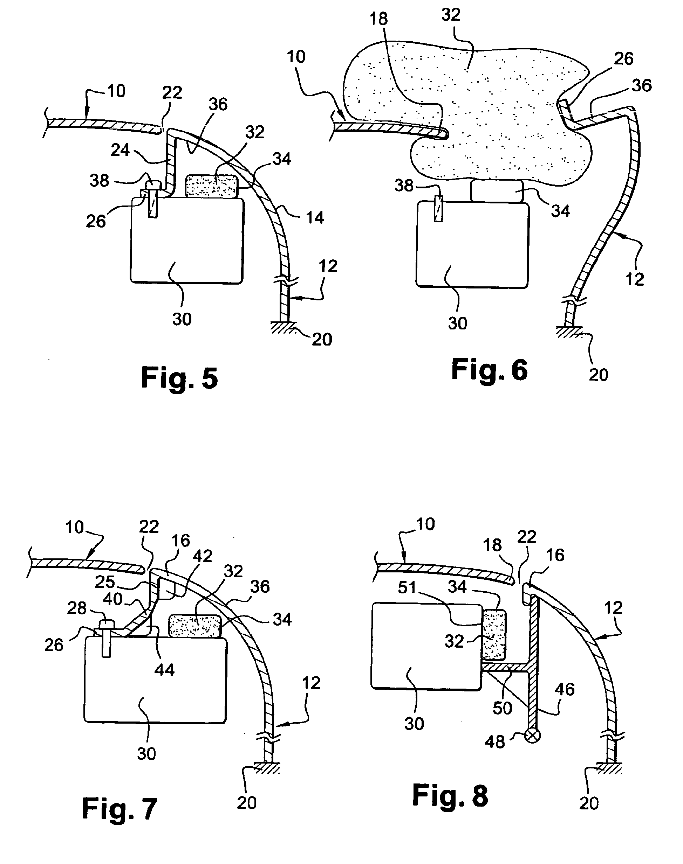

On peut voir sur la figure 5 que le coussin gonflable 32 est situé à l'intérieur de l'aile avant 12. Ainsi, le boîtier 34 est fixé sous l'aile 12, entre la paroi verticale 24 et la surface intérieure 36 de l'aile 12. Eventuellement, la surface intérieure 36 peut être recouverte d'un film de protection (non représenté) pour anticiper les risques de ruptures à la surface de l'aile 12.

Le rebord 26 de la paroi verticale 24 est fixé à la pièce de structure 30, grâce à un moyen de fixation fusible 38 suffisamment solide pour maintenir l'aile mais pas assez pour résister à la pression du coussin gonflable 32 lors de son déploiement. Le moyen de fixation fusible 38 est par exemple un rivet en plastique.

Lorsque le coussin gonflable 32 se déploie, il exerce une pression sur la surface intérieure 36 de la peau 14 et sur la paroi 24, donc sur les moyens de fixation 38, au point de les casser.

Puis, comme on le voit sur la figure 6, le rebord 26 de l'aile 12 est désolidarisé de la pièce de structure 30 de façon à augmenter le jeu 22 pour que le coussin gonflable 32 recouvre l'extrémité 18 du capot 10. Après la libération du rebord 26, l'aile 12 s'est déformée pour laisser le coussin 32 se déployer. Cependant, grâce à la fixation permanente 20, l'aile 12 est retenue à la structure, évitant ainsi tout danger de projection vers l'extérieur du véhicule.

Dans le mode de réalisation de la figure 7, on peut voir que le retour d'aile est constitué par une paroi 25, comportant une striction d'épaisseur 40 au voisinage du bord 16 et fixée sur la pièce de structure 30 grâce à la fixation permanente 28.

Pour provoquer la rupture dans la zone de striction 40, des renforts 42 et 44 sont agencés à l'intérieur de l'aile 12, au voisinage du bord 16 et du rebord 26.

Ainsi, lorsque le coussin gonflable 32 se déploie à l'intérieur de l'aile 12, il exerce une pression sur la surface intérieure 36 et sur la paroi 25, notamment au niveau de la striction d'épaisseur 40. Sous cette pression, et en raison de la fragilité de la paroi au niveau de la striction 40, la paroi 25 est rompue, ce qui permet au coussin gonflable 32 de sortir hors du véhicule, en agrandissant le jeu 22.

La partie supérieure de l'aile 12 est libérée par la rupture de la zone 40, mais reste maintenue sur le véhicule automobile grâce au point de fixation 20.

Dans le mode de réalisation de la figure 8, l'aile 12 est fixée à la structure du véhicule grâce à un bras 46, monté pivotant autour d'un axe de rotation 48, fixé à la structure du véhicule. Le bras 46 est fixé de façon rigide à l'aile 12, au niveau du bord 16, par exemple par collage, vissage ou soudage. Le bras 46 sert de moyen de fixation de l'aile à la structure du véhicule.

Le bras 46 est par ailleurs relié à la pièce de structure 30 par un barreau 50, perpendiculaire au bras. Ce barreau 50 est fixé de façon fusible à la pièce 30. Le coussin gonflable 32 est, dans ce mode de réalisation, fixé à la pièce de structure 30 entre une paroi verticale 51 de celle-ci et le bras 46, au-dessus du barreau 50.

Le coussin 32 pourrait également, dans d'autres de réalisation (non représentés), être fixé sur le barreau 50 ou sur le bras 46.

Lorsque le coussin se déploie, il exerce une pression sur le barreau 50, sur le bras 46 et sur la face intérieure du capot 10. Cette pression augmentant, la fixation fusible du barreau 50 à la pièce 30 cède, le bras 46 est poussé vers l'extérieur du véhicule, entraînant la déformation de l'aile 12 en matière plastique. Le barreau pivote autour de l'axe 48 et le jeu 22 entre le bord 18 du capot 10 et le bord 16 de l'aile augmente, laissant un passage pour le coussin gonflable.

Selon un autre mode de réalisation (non représenté), le bras pivotant 46 est une paroi pivotante autour d'un axe de rotation lié à la structure, et le barreau 50 est une paroi horizontale.

Selon un autre mode de réalisation (non représenté), le bras pivotant 46 est commandé électriquement. Ainsi, à la suite de la détection d'un impact avec un piéton, lorsqu'un signal est envoyé au coussin gonflable pour qu'il se déclenche, un autre signal commande automatiquement le pivotement du bras 46 autour de l'axe 48. Alors, l'aile 12 n'est plus déformée uniquement par la pression du coussin gonflable 32 mais également par le mouvement du bras 46. Le déploiement du coussin gonflable 32 hors du véhicule en est donc facilité.

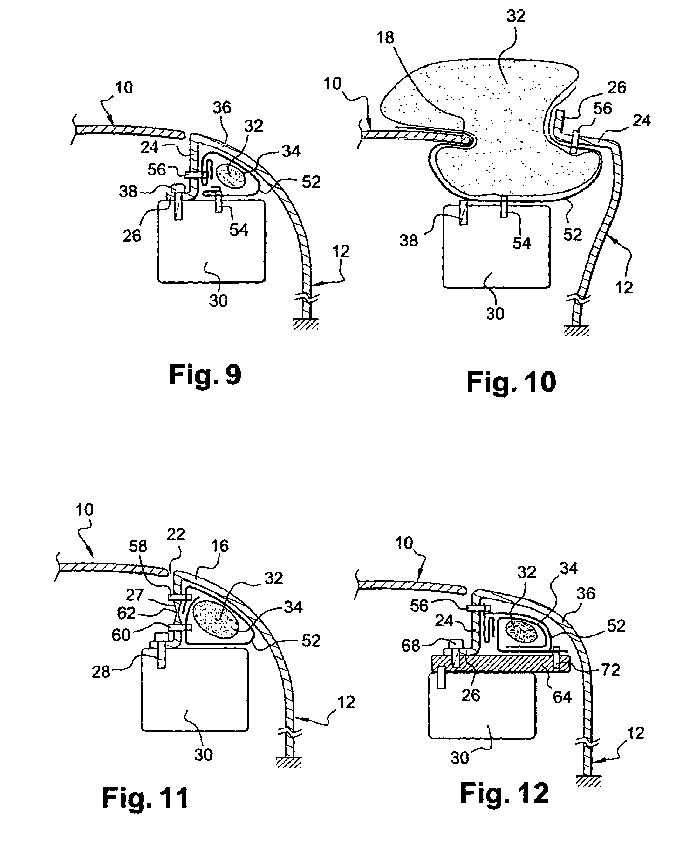

Dans le mode de réalisation de la figure 9, le rebord 26 de la paroi verticale 24 est relié à la pièce de structure 30 par un moyen de fixation fusible 38. Le boîtier 34 du coussin 32 est agencé entre la paroi 24 de l'aile et sa surface intérieure 36. Dans ce mode de réalisation, le boîtier 34 n'est plus directement fixé à la pièce de structure 30 mais enveloppé dans une enveloppe 52 et rapporté sur le véhicule avec l'aile 12.

Cette enveloppe 52 est réalisée dans un matériau relativement souple, en tôle d'aluminium ou en matière plastique. Elle est fixée à la pièce de structure 30 grâce à une fixation permanente 54. Elle est également fixée à la paroi verticale 24 de l'aile 12 par une fixation permanente 56.

L'enveloppe 52 entoure le coussin 32 en position de repos de façon à ce que lorsque celui-ci se déploie, l'enveloppe 52 s'interpose entre le coussin et les arêtes vives qu'il rencontre pour le protéger. Ainsi, les extrémités de l'enveloppe 52 sont suffisamment grandes pour couvrir les bords 16 et 18.

Eventuellement, on peut ajouter d'autres moyens de liaison permanents ou non (collage, adhésivage, soudure) entre l'enveloppe 52 et la surface 36 de l'aile afin d'assurer l'unité de l'ensemble aile- enveloppe -coussin.

Lorsque le coussin gonflable 32 se déploie, comme on le voit sur la figure 10, il exerce une pression sur toute la surface de l'enveloppe 52 et tire sur la fixation fusible 38. L'enveloppe 52 étant plus résistante à cette pression que la fixation 38, le déploiement du coussin gonflable 32 rompt la fixation 38. Puis, l'aile 12 se déforme de façon à ce que sa paroi verticale 24 subisse un mouvement vers l'extérieur, agrandissant le jeu 22 pour que le coussin gonflable 32 recouvre le bord 18 du capot et poursuivre son déploiement à l'extérieur du véhicule.

Lors du déploiement du coussin, l'enveloppe 52 se tend, de façon à guider le coussin 32 vers l'extérieur du véhicule et à l'empêcher de s'infiltrer à l'intérieur de l'aile.

Par ailleurs, l'enveloppe 52 permet de retenir l'extrémité 26 de l'aile 12 sur le véhicule automobile. En effet, les fixations 54 à la pièce de structure 30 et 56 à la paroi 24 de l'aile 12 sont suffisamment solides pour ne pas être rompues lors du déploiement du coussin 32. Ainsi, l'extrémité 26 de l'aile 12 n'est pas totalement libre, ce qui évite la projection de l'aile 12 ou de son extrémité vers l'extérieur et donc un danger pour d'autres piétons.

En outre, l'enveloppe 52 joue un double rôle de protection. D'une part, elle protège le coussin gonflable 32 lors de son déploiement, en étant assez grande pour recouvrir les arêtes vives qu'il rencontre et éviter qu'il se déchire. Pour cela, l'enveloppe se plaque sur las arêtes vives lors de son ouverture. D'autre part, elle protège l'aile 12 lors de la déflagration due au déclenchement du coussin. En effet, celui-ci se déploie dans un premier temps dans l'enveloppe, puis il déforme l'aile, ce qui évite que celle-ci ne se casse à cause de la déflagration. De plus, l'enveloppe 52 protège le coussin 32 du milieu extérieur, lorsque celui-ci est en position de repos.

Dans le mode de réalisation de la figure 11, l'enveloppe 52 n'est plus fixée à la pièce de structure 30 mais au retour d'aile, plus précisément une paroi 27, au moyen de fixations permanentes 58 et 60. La paroi 27, fixée à la pièce de structure 30 par la fixation permanente 28, comporte une striction d'épaisseur au niveau d'une zone 62 située entre les deux fixations permanentes 58 et 60.

Lors du déploiement du coussin 32, celui-ci exerce une pression sur toute l'enveloppe 52 ainsi que sur une partie de la paroi 27, et tire sur la striction 62. Sous l'effet de la pression, cette striction 62 se casse, de façon à laisser un passage pour le coussin 32 qui agrandit ensuite le jeu 22 pour se déployer à l'extérieur du véhicule. Comme les extrémités de l'enveloppe 52 se chevauchent lorsque le coussin est au repos, elles entourent celui-ci lors de son déploiement de façon à le protéger de l'extérieur.

Dans ce mode de réalisation également, l'enveloppe 52 constitue un moyen de guidage du coussin gonflable lors de son déploiement ainsi qu'un moyen de retenue de l'extrémité libre de l'aile 12 lorsque la paroi 27 a été rompue.

Selon un autre mode de réalisation (non représenté), l'enveloppe 52 est remplacée par un câble fixé également à l'aile et éventuellement à la pièce de structure 30. Dans ce cas, le câble n'a plus la fonction de guidage qu'apporte l'enveloppe 52, il a uniquement une fonction de retenue de l'extrémité de l'aile 12 à la structure du véhicule.

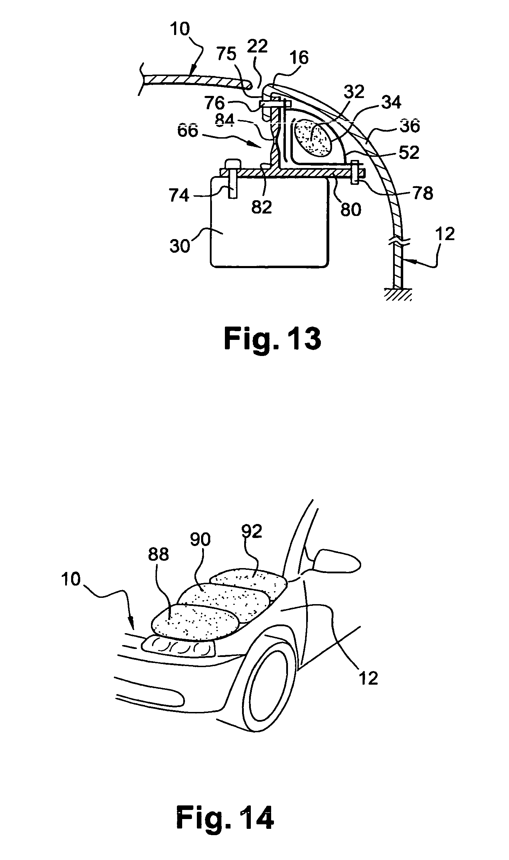

Dans les modes de réalisation des figures 12 et 13, l'aile 12 est reliée à la pièce de structure 30 par l'intermédiaire d'un support d'aile respectivement 64 et 66. Outre leur fonction de support, les supports d'aile 64 et 66 ont une fonction d'appui et de guidage du coussin gonflable 32.

Sur ces deux modes de réalisation, l'enveloppe 52 est toujours disposée autour du coussin gonflable 32. Elle est fixée aux supports 64, 66 et à la structure 30 grâce à des pattes de fixation. Grâce à ces pattes, le boîtier 34, et donc le coussin 32 lors de son déploiement, ne sont pas en contact avec les moyens de fixation de l'enveloppe 52 sur le véhicule, ce qui évite des risques de déchirure du coussin 32.

Sur la figure 12, le support 64 est un plateau, solidement fixé à la pièce de structure 30. Le rebord 26 de l'aile 12 est fixé à ce support 64 par une fixation fusible 68. Une patte de fixation de l'enveloppe 52 est fixée de façon solide à la paroi verticale 24 grâce à une fixation 56. Une deuxième patte de fixation de l'enveloppe 52 est fixée au renfort 64, par une fixation permanente 72.

Lors du déploiement du coussin gonflable 32, celui-ci exerce une pression sur l'ensemble de l'enveloppe 52 et indirectement sur le moyen de fixation fusible 68 qui se casse, créant un passage pour le coussin 32 afin que celui-ci se déploie vers l'extérieur en agrandissant le jeu 22.

Le support 66 de la figure 13 est fixé à la pièce de structure 30 au moyen d'une fixation permanente 74. Dans ce mode de réalisation, l'aile 12 ne comporte pas une paroi verticale intérieure mais juste un rebord 75 sous le bord 16. Le support 66 est également fixé à ce rebord 75 par un moyen de fixation 76, également permanent.

Le support 66 comporte un plateau 80 agencé directement sur la pièce de structure 30 et une paroi verticale 82, perpendiculaire à ce plateau 80 est dirigée vers le haut, entre le plateau 80 et le rebord 75. Cette paroi verticale 82 comporte une zone 84 de striction, où l'épaisseur de matière plastique est moins grande que sur le reste de la paroi 82.

Une patte de fixation de l'enveloppe 52 est solidaire de cette paroi verticale 82 au moyen de la fixation permanente 76, et une autre patte de fixation est solidaire du plateau 80 grâce à une fixation permanente 78.

Lors du déploiement du coussin 32, celui-ci exerce une pression sur l'ensemble de la surface de l'enveloppe 52 ainsi que sur la zone de striction 84. Cette zone 84 se rompt et laisse un passage pour que le coussin 32 se déploie vers l'extérieur du véhicule, en agrandissant le jeu 22. La partie restante de la paroi 82 permet de guider le coussin 32 vers l'extérieur et empêche le gonflage du coussin sous le capot 10.

Un avantage des supports 64 et 66 consiste en ce qu'ils constituent un support du boîtier 34 du coussin 32. Ainsi, lors du montage du véhicule, le coussin 32, le boîtier 34, et l'enveloppe 52 sont directement fixés sur le support 64 ou 66, qui est ensuite fixé à l'aile 12 au moyen des fixations 68 et 76. Ensuite, l'aile 12, comportant le coussin 32, est fixée sur le véhicule, notamment sur la pièce de structure 30. Ce procédé permet donc de limiter le nombre d'opérations de montage sur la structure du véhicule, diminuant l'occupation de celle-ci sur la chaîne de montage.

Par ailleurs, l'aile 12 comportant de tels supports 64 ou 66 avec le coussin gonflable peut constituer un module d'aile, sur lequel sont rapportés également d'autres supports d'organes fonctionnels, tels qu'un support de boîtier de lave-glace, un support d'optique, etc. Ce module d'aile, ensuite fixé au véhicule automobile, a l'avantage de présenter un module "prêt à monter", pour le constructeur automobile.

Enfin, sur le mode de réalisation de la figure 14, on peut voir que le véhicule est équipé de trois coussins gonflables (88, 90, 92).

La juxtaposition de ces coussins gonflables permet de couvrir une zone bien plus grande de la jonction aile-capot, notamment d'autres zones dangereuses telles que la traverse de face avant technique, les coupelles d'amortisseurs, la batterie, les supports d'optiques, la zone auvent comportant les axes et raclettes d'essuie vitre.

Selon un mode de réalisation non représenté, les coussins gonflables sont dimensionnés différemment selon leur position sur le véhicule et plus précisément le long de la jonction aile-capot. En effet, on sait que la zone de la jonction aile-capot située près du pare-chocs doit protéger un piéton de la taille d'un enfant, alors que la zone située plus en arrière vers le pare-brise doit plutôt protéger un piéton de taille adulte. Par conséquent, le coussin 88 peut être un coussin plus petit ou plus souple pour protéger un enfant et le coussin 92 un coussin plus raide et plus grand pour protéger un adulte. On notera que cette caractéristique peut être présente à l'avant d'un véhicule sans nécessiter que le coussin gonflable agrandisse le jeu laissé par le capot et l'aile.

Enfin, on notera que l'invention n'est pas limitée aux modes de réalisation précédemment décrits.

## Revendications

1. A l'avant d'un véhicule automobile, utilisation d'une aile (12) et d'un capot (10) réalisant une jonction aile-capot laissant un jeu prédéterminé (22) entre un bord (18) du capot et un bord (16) de l'aile, en combinaison avec un coussin gonflable (32) destiné à se déployer à l'extérieur du véhicule, **caractérisé en ce qu'**au cours de son déploiement, le coussin gonflable (32) déforme l'aile (12) de façon à agrandir le jeu (22) et à se créer un passage entre le bord (18) du capot et le bord (16) de l'aile.

2. Utilisation d'une aile et d'un capot selon la revendication 1, en combinaison avec plusieurs coussins gonflables (88, 90, 92).

3. Utilisation d'une aile et d'un capot selon la revendication 2, dans laquelle chaque coussin est dimensionné différemment selon qu'il est destiné à protéger un adulte ou un enfant.

4. Utilisation d'une aile et d'un capot selon l'une quelconque des revendications 1 à 3, dans laquelle le coussin gonflable (32) est destiné à se déployer en couvrant la jonction aile-capot.

5. Utilisation d'une aile et d'un capot selon l'une quelconque des revendications 1 à 4, en combinaison avec des moyens (38, 40, 62, 68, 84) de maintien cassants pour relier l'aile (12) à la structure (30) du véhicule.

6. Dispositif avant de véhicule automobile comportant une aile (12) et un capot (18) réalisant une jonction aile-capot laissant un jeu prédéterminé (22) entre un bord (18) du capot et un bord (16) de l'aile, en combinaison avec un coussin gonflable (32) destiné à se déployer à l'extérieur du véhicule, **caractérisé en ce qu**'au cours de son déploiement, le coussin gonflable (32) déforme l'aile (12) de façon à agrandir le jeu (22) et à se créer un passage entre le bord (18) du capot et le bord (16) de l'aile.

7. Dispositif selon la revendication 6, comportant un moyen de retenue (52) de l'aile avant (12) maintenue en position normale d'utilisation sur le véhicule par un moyen de maintien (24, 82), ce moyen de maintien (24, 82) étant distinct du moyen de retenue (52) et étant apte à libérer l'aile lorsqu'il subit une force supérieure à un seuil prédéterminé, ledit moyen de retenue (52) étant apte à retenir l'aile (12) libérée par le moyen de maintien (24, 82).

8. Dispositif selon la revendication 7, comprenant un câble fixé à l'aile et à une pièce de structure du véhicule automobile.

9. Dispositif selon la revendication 7, comprenant une enveloppe (52) fixée à l'aile (12) et à une pièce de structure (30) du véhicule automobile.

10. Dispositif selon la revendication 9, dans lequel l'enveloppe (52) est disposée autour du coussin gonflable (32) lorsque celui-ci est dans une position de repos.

11. Dispositif selon la revendication 10, dans lequel l'enveloppe (52) est fixée à proximité d'un bord supérieur de l'aile de manière à guider le coussin gonflable (32) au cours de son déploiement.

12. Dispositif selon la revendication 10 ou 11, dans lequel l'enveloppe (52) présente des dimensions et une résistance suffisantes pour accompagner le coussin gonflable (32) lors de son déploiement et s'interposer entre les bords (16, 18) de l'aile et du capot et le coussin pour le protéger.

13. Dispositif selon l'une quelconque des revendications 7 à 12, en tôle ou en matière plastique.

14. Dispositif selon l'une quelconque des revendications précédentes, comprenant un support (46, 50) d'aile avant (12), reliant une partie supérieure (16) de l'aile (12) à la structure (48) du véhicule, comportant un pivot (48) par lequel il peut être relié à la structure, de manière à permettre l'agrandissement du jeu (22).

15. Dispositif selon la revendication 14, commandé électriquement.

16. Dispositif selon l'une quelconque des revendications 14 et 15, dans lequel le coussin gonflable (32) est agencé pour pousser sur le support (46, 50).

17. Dispositif selon l'une quelconque des revendications précédentes, comprenant un support (64, 66) d'aile avant (12), reliant une partie supérieure (16) de l'aile à la structure (30) du véhicule, le support comportant un logement pour un coussin gonflable (32) situé entre l'intérieur (36) de l'aile (12) et la structure (30) du véhicule.

18. Dispositif selon la revendication 17, dans lequel le support comporte, du côté de la structure (30), une semelle (64, 80) servant de surface d'appui pour le coussin gonflable (32) au cours de son déploiement.

19. Dispositif selon l'une quelconque des revendications 17 et 18, dans lequel le support comporte une zone (68, 84) apte à se rompre sous la poussée du coussin gonflable (32) pour libérer la partie supérieure (16) de l'aile.

20. Dispositif selon l'une quelconque des revendications précédentes, dans lequel l'aile comporte une peau (14) de carrosserie séparant l'intérieur et l'extérieur de l'aile, terminée par un bord (16) destiné à jouxter un capot (10), et un logement pour un coussin gonflable, situé à l'intérieur de l'aile (12) et au voisinage du bord (16).

21. Dispositif selon la revendication 20, dans lequel l'aile est en matière plastique ou en tôle.

22. Dispositif selon la revendication 20 ou 21, dans lequel l'aile comporte un moyen de maintien (24) sur le véhicule en position normale d'utilisation, et le moyen de maintien (24) est venu de matière avec la peau (14) et comporte une zone (40, 62) apte à se rompre.

23. Dispositif selon l'une quelconque des revendications 1 à 22, dans lequel le capot comprend un bord (18) déformable, déformé lors du déploiement du coussin gonflable (32), le capot étant éventuellement en matière plastique, en tôle ou un hybride métal/plastique.

24. Aile avant destinée à faire partie d'un dispositif selon l'une quelconque des revendications 6 à 23.

25. Module d'aile avant de véhicule automobile, comprenant une aile avant (12) et un support d'aile (46, 50, 64, 66) destiné à faire partie d'une dispositif selon l'une quelconque des revendications 6 à 23.

26. Module d'aile selon la revendication 25, comportant des supports d'organes fonctionnels.

## Claims

1. At the front of a motor vehicle, the use of a fender (12) and of a hood (10) providing a fender-hood junction that leaves predetermined clearance (22) between an edge (18) of the hood and an edge (16) of the fender, in combination with an inflatable airbag (32) for deploying outside the vehicle, the use being **characterized in that** during its deployment the inflatable airbag (32) deforms the fender (12) so as to enlarge the clearance (22) and make itself a passage between the edge (18) of the hood and the edge (16) of the fender.

2. The use of a fender and of a hood according to claim 1, in combination with a plurality of inflatable airbags (88, 90, 92).

3. The use of a fender and of a hood according to claim 2, in which each airbag is of different dimensions depending on whether it is for protecting an adult or a child.

4. The use of a fender and of a hood according to any one of claims 1 to 3, in which the inflatable airbag (32) is designed to deploy so as to cover the fender-hood junction.

5. The use of a fender and of a hood according to any one of claims 1 to 4, in combination with breakable holder means (38, 40, 62, 68, 84) for connecting the fender (12) to the structure (30) of the vehicle.

6. A motor vehicle front disposition comprising a fender (12) and hood (18) providing a fender-hood junction leaving predetermined clearance (22) between an edge (18) of the hood and an edge (16) of the fender, in combination with an inflatable airbag (32) designed to deploy outside the vehicle, the disposition being **characterized in that** during its deployment, the inflatable airbag (32) deforms the fender (12) so as to enlarge the clearance (22) and make itself a passage between the edge (18) of the hood and the edge (16) of the fender.

7. A disposition according to claim 6, including retention means (52) for the front fender (12) held in the normal utilization position on the vehicle by holder means (24, 82), the holder means (24, 82) being distinct from the retention means (52) and being suitable for releasing the fender on being subjected to a force greater than a predetermined threshold, said retention means (52) being suitable for retaining the fender (12) once released by the holder means (24, 82).

8. A disposition according to claim 7, including a cable fastened to the fender and to a structural part of the motor vehicle.

9. A disposition according to claim 7, including a casing (52) fastened to the fender (12) and to a structural part (30) of the motor vehicle.

10. A disposition according to claim 9, in which the casing (52) is disposed around the inflatable airbag (32) when it is in a rest position.

11. A disposition according to claim 10, in which the casing (52) is fastened close to a top edge of the fender in such a manner as to guide the inflatable airbag (32) while it is deploying.

12. A disposition according to claim 10 or claim 11, in which the casing (52) presents dimensions and strength that are sufficient for accompanying the inflatable airbag (32) while it is deploying and to become interposed between the airbag and the edges (16, 18) of the fender and of the hood in order to protect the airbag.

13. A disposition according to any one of claims 7 to 12, made of sheet metal or of plastics material.

14. A disposition according to any preceding claim, including a support (46, 50) for a front fender (12), connecting a top portion (16) of the fender (12) to the structure (48) of the vehicle, and including a pivot (48) whereby it can be connected to the structure in such a manner as to enable the clearance (22) to be enlarged.

15. A disposition according to claim 14, that is controlled electrically.

16. A disposition according to claim 14 or claim 15, in which the inflatable airbag (22) is arranged to push against the support (46, 50).

17. A disposition according to any preceding claim, including a support (64, 66) for a front fender (12), connecting a top portion (16) of the fender to the structure (30) of the vehicle, the support including a housing for an inflatable airbag (32) situated between the inside (36) of the fender (12) and the structure (30) of the vehicle.

18. A disposition according to claim 17, in which the support includes, beside the structure (30), a soleplate (64, 80) serving as a bearing surface for the inflatable airbag (32) while it is deploying.

19. A disposition according to claim 17 or claim 18, in which the support includes a zone (68, 84) suitable for breaking under thrust from the inflatable airbag (32) in order to release the top portion (16) of the fender.

20. A disposition according to any preceding claim, in which the fender includes a bodywork skin (14) separating the inside and the outside of the fender and terminated by an edge (16) designed to juxtapose a hood (10), together with a housing for an inflatable airbag situated inside the fender (12) and close to the edge (16).

21. A disposition according to claim 20, in which the fender is made of plastics material or of sheet metal.

22. A disposition according to claim 20 or claim 21, in which the fender includes holder means (24) for holding it on the vehicle in a normal utilization position, and the holder means (24) is molded integrally with the skin (14) and includes a zone (40, 62) suitable for breaking.

23. A disposition according to any one of claims 1 to 22, in which the hood includes a deformable edge (18) that is deformed during deployment of the inflatable airbag (32), the hood optionally being made of plastics material, of sheet metal, or as a metal and plastics material hybrid.

24. A front fender for forming part of a disposition according to any one of claims 6 to 23.

25. A motor vehicle front fender module comprising a front fender (12) and a fender support (46, 50, 64, 66) designed to form part of a disposition according to any one of claims 6 to 23.

26. A fender module according to claim 25, including supports for functional members.

## Patentansprüche

1. Verwendung eines Kotflügels (12) und einer Motorhaube (10) an der Vorderseite eines Kraftfahrzeugs, die eine Verbindung Kotflügel-Motorhaube bilden, welche ein vordefiniertes Spiel (22) zwischen einem Rand (18) der Motorhaube und einem Rand (16) des Kotflügels aufweist, in Kombination mit einem Airbag (32), der dazu bestimmt sich, sich außerhalb des Fahrzeugs zu entfalten, **dadurch gekennzeichnet, dass** der Airbag (32) während seiner Entfaltung den Kotflügel (12) derart verformt, dass das Spiel (22) vergrößert und ein Durchlass zwischen dem Rand (18) der Motorhaube und dem Rand (16) des Kotflügels für den Airbag geschaffen wird.

2. Verwendung eines Kotflügels und einer Motorhaube nach Anspruch 1 in Kombination mit mehreren Airbags (88, 90, 92).

3. Verwendung eines Kotflügels und einer Motorhaube nach Anspruch 2, bei der jeder Airbag in Abhängigkeit davon, ob er dazu bestimmt ist, einen Erwachsenen oder ein Kind zu schützen, unterschiedlich dimensioniert ist.

4. Verwendung eines Kotflügels und einer Motorhaube nach einem der Ansprüche 1 bis 3, bei der der Airbag (32) dazu bestimmt ist, die Verbindung Kotflügel-Motorhaube zu überdecken, während er sich entfaltet.

5. Verwendung eines Kotflügels und einer Motorhaube nach einem der Ansprüche 1 bis 4 in Kombination mit Sollbruch-Haltemitteln (38, 40, 62, 68, 84) zum Verbinden des Kotflügels (12) mit der Struktur (30) des Fahrzeugs.

6. Vordere Vorrichtung eines Kraftfahrzeugs mit einem Kotflügel (12) und einer Motorhaube (10), die eine Verbindung Kotflügel-Motorhaube bildet, welche ein vordefiniertes Spiel (22) zwischen einem Rand (18) der Motorhaube und einem Rand (16) des Kotflügels aufweist, in Kombination mit einem Airbag (32), der dazu bestimmt sich, sich außerhalb des Fahrzeugs zu entfalten, **dadurch gekennzeichnet, dass** der Airbag (32) während seiner Entfaltung den Kotflügel (12) derart verformt, dass das Spiel (22) vergrößert und ein Durchlass zwischen dem Rand (18) der Motorhaube und dem Rand (16) des Kotflügels für den Airbag geschaffen wird.

7. Vorrichtung nach Anspruch 6 mit einem Mittel (52) zum Zurückhalten des vorderen Kotflügels (12), der durch ein Haltemittel (24, 82) in der normalen Nutzungsposition am Fahrzeug gehalten wird, wobei sich dieses Haltemittel (24, 82) von dem Rückhaltemittel (52) unterscheidet und den Kotflügel freizugeben vermag, wenn es einer Kraft ausgesetzt wird, die eine vordefinierte Schwelle überschreitet, wobei das Rückhaltemittel (52) den von dem Haltemittel (24, 82) freigegebenen Kotflügel (12) zurückzuhalten vermag.

8. Vorrichtung nach Anspruch 7, die ein an dem Kotflügel und an einem Strukturteil des Kraftfahrzeugs befestigtes Kabel umfasst.

9. Vorrichtung nach Anspruch 7, die eine an dem Kotflügel (12) und an einem Strukturteil (30) des Kraftfahrzeugs befestigte Umhüllung (52) umfasst.

10. Vorrichtung nach Anspruch 9, in der die Umhüllung (52) um den Airbag (32) herum angeordnet ist, wenn sich dieser in einer Ruhestellung befindet.

11. Vorrichtung nach Anspruch 10, in der die Umhüllung (52) derart in der Nähe eines oberen Rands des Kotflügels befestigt ist, dass sie den Airbag (32) während seiner Entfaltung führt.

12. Vorrichtung nach Anspruch 10 oder 11, in der die Umhüllung (52) ausreichende Abmessungen und eine ausreichende Festigkeit aufweist, um den Airbag (32) während seiner Entfaltung zu begleiten und sich zwischen den Rändern (16, 18) des Kotflügels und der Motorhaube und dem Airbag einzufügen, um diesen zu schützen.

13. Vorrichtung nach einem der Ansprüche 7 bis 12 aus Blech oder aus Kunststoff.

14. Vorrichtung nach einem der vorhergehenden Ansprüche, die ein Tragelement (46, 50) für den vorderen Kotflügel (12) umfasst, das einen oberen Teil (16) des Kotflügels (12) mit der Struktur (30) des Fahrzeugs verbindet, das einen Zapfen (48) aufweist, durch den es mit der Struktur derart verbunden werden kann, dass die Vergrößerung des Spiels (22) ermöglicht wird.

15. Vorrichtung nach Anspruch 14, die elektrisch betätigt wird.

16. Vorrichtung nach einem der Ansprüche 14 oder 15, in welcher der Airbag (32) so angeordnet ist, dass er gegen das Tragelement (46, 50) drückt.

17. Vorrichtung nach einem der vorhergehenden Ansprüche, die ein Tragelement (64, 66) für den vorderen Kotflügel (12) umfasst, das einen oberen Teil (16) des Kotflügels mit der Struktur (30) des Fahrzeugs verbindet, wobei das Tragelement eine Aufnahme für einen Airbag (32) aufweist, der zwischen der Innenseite (36) des Kotflügels (12) und der Struktur (30) des Fahrzeugs angeordnet ist.

18. Vorrichtung nach Anspruch 17, in der das Tragelement auf der Seite der Struktur (30) eine Sohle (64, 80) aufweist, die als Auflagefläche für den Airbag (32) während seiner Entfaltung dient.

19. Vorrichtung nach einem der Ansprüche 17 und 18, in der das Tragelement einen Bereich (68, 84) aufweist, der unter der Schubwirkung des Airbags (32) zu brechen vermag, um den oberen Teil (16) des Kotflügels freizugeben.

20. Vorrichtung nach einem der vorhergehenden Ansprüche, in welcher der Kotflügel eine Karosserieverkleidung (14) aufweist, die die Innenseite und die Außenseite des Kotflügels trennt und durch einen Rand (16) abgeschlossen ist, der dazu bestimmt ist, an eine Motorhaube (10) anzugrenzen, sowie eine Aufnahme für einen Airbag, der auf der Innenseite des Kotflügels (12) in der Umgebung des Rands (16) angeordnet ist.

21. Vorrichtung nach Anspruch 20, in welcher der Kotflügel aus Kunststoff oder Blech ausgeführt ist.

22. Vorrichtung nach Anspruch 20 oder 21, in welcher der Kotflügel ein Mittel (24) zum Halten in der normalen Nutzungsposition am Fahrzeug aufweist und das Haltemittel (24) aus einem Material mit der Verkleidung (14) hergestellt ist und einen Bereich (40, 62) aufweist, der zu brechen vermag.

23. Vorrichtung nach einem der Ansprüche 1 bis 22, in der die Motorhaube einen verformbaren Rand (18) umfasst, der während der Entfaltung des Airbags (32) verformt wird, wobei die Motorhaube eventuell aus Kunststoff, aus Blech oder einem Metall-Kunststoff-Hybrid ausgeführt ist.

24. Vorderer Kotflügel, der als Bestandteil einer Vorrichtung nach einem der Ansprüche 6 bis 23 vorgesehen ist.

25. Vorderes Kotflügelmodul eines Kraftfahrzeugs, das einen vorderen Kotflügel (12) und ein Kotflügel-Tragelement (46, 50, 64, 66) umfasst, das als Bestandteil einer Vorrichtung nach einem der Ansprüche 6 bis 23 vorgesehen ist.

26. Kotflügelmodul nach Anspruch 25, das Tragelemente für Funktionselemente aufweist.
